# EUROPEAN PATENT SPECIFICATION

(11) **EP 2 181 973 B1**
(45) Date of publication and mention of the grant of the patent: **11.12.2013**
(21) Application number: 08425695.7
(22) Date of filing: 29.10.2008
(51) Int. Cl.: C04B 22/06, C04B 28/06, C04B 28/12

(54) **Powdered preparation for making mortars for plastering and filling chases**
Pulverförmige Zubereitung zur Herstellung von Mörtel für Putz- und Füllformen
Préparation en poudre pour la fabrication de mortiers pour le plâtrage et le remplissage de saignées

(43) Date of publication of application: 05.05.2010
(73) Proprietor: Tassullo S.p.A., 38010 Tassullo (TN) (IT)
(72) Inventor: Odorizzi, Stefano, 38010 Tassullo (Trento) (IT); Dalpiaz, Michele, 38010 Tassullo (Trento) (IT)
(74) Representative: Ponchiroli, Simone

(56) References cited:
- EP-A- 0 816 299
- DE-A1- 4 300 894
- KR-A- 20030 032 633
- US-A1- 2002 161 071
- SCHÖNDORFER GMBH: "Dolomit Feinmehle" TECHNICAL DATASHEET, [Online] 13 October 2007 (2007-10-13), XP002515184 Retrieved from the Internet: URL:http://web.archive.org/web/20071013041 854/http://www.dolomitwerk.de/feinmehle.51 .0.html> [retrieved on 2009-04-03]

## Description

The present invention relates to a powdered preparation for making mortars for plastering and filling chases by mixing with water.

In the building industry, laying systems (plumbing, wiring, etc.) normally involves opening up chases in walls and floors, in which the ducts are placed. To prevent them from moving accidentally, once the ducts have been laid they are fixed at two or more points with quick-setting cement.

When the systems have been laid, the chases are closed with mortar. Then, when the mortar is dry, the walls can be plastered to create the surface finish upon which the final skim coat and then paint can be applied.

However, this known method has several disadvantages.

First of all, the mortars known today which can be used to fill and close chases have relatively lengthy drying times (many hours) which means that closing of the chases and plastering must be carried out as two separate operations. Secondly, different mortars now have to be used for filling and for plastering, as those for the former do not allow surface finishes of sufficient quality to allow the skim coat, whilst those for the latter cannot be used for filling.

Therefore, it seems clear that when systems are laid as part of building renovation work, or in any case, in existing buildings, the prior art know today is particularly disadvantageous. In such a case, the chases are mostly made in walls which are already finished and plastered (in contrast, in the case of new builds, when the chases are created and subsequently closed the walls are usually still unfinished). Consequently, once the systems have been laid, the building work is limited to closing the chases. Even the plaster is restored only at the chases.

However, due to the lengthy drying times of mortars used for filling, the work must inevitably be done in two separate stages (for example over a period of two consecutive days), resulting in a huge waste of working time.

It is also known from Korean patent No. 2003-0032633 a hydraulic plaster composition with multifunctionality such as antibiotic properties, far-infrared radiation resistance and deodorization capabilities, and more particularly a plaster composition obtained by adding hydraulic expandable cement, lime, micro silica and modified acrylic resin forming agents and binders to materials intrinsically having special functionality such as sericite powder and red clay. Such a composition is for plastering only and only its use in thin layer is foreseen.

In this situation the technical purpose which forms the basis of the present invention is to provide a powdered preparation for making mortars for plastering and filling chases which overcomes the above-mentioned disadvantages. In particular, the technical purpose of the present invention is to provide a powdered preparation for making mortars for plastering and filling chases which can be used both for filling chases and for the final plastering.

The present invention also has for a technical purpose to provide a powdered preparation for making mortars for plastering and filling chases which with a single operation allows closing of the chases in walls with a surface finish comparable to that of a conventional plaster.

It should be noticed that at present there are no preparations on the market which are able to perform said task, since the various known quick-setting cements, gessoes and mortars cannot guarantee, at the same time, rapid setting, sufficiently limited contraction, suitable hardness once dried and a good quality surface finish.

The technical purpose specified and the aims indicated are substantially achieved by a powdered preparation for making mortars for plastering and filling chases as described in the claims herein. Further characteristics and the advantages of the present invention are more apparent in the detailed description which follows of several preferred, non-limiting embodiments of a powdered preparation for making mortars for plastering and filling chases.

In general, a preparation made in accordance with the present invention comprises at least four main components: dolomitic sand, natural hydraulic lime, sulpho-aluminous cement and lithium carbonate. However, in the preferred embodiments, such preparations also comprise methyl-hydroxypropyl starch and sodium lauryl sulphate, two components which allow optimisation of the workability and applicability of the end product (mortar).

The powdered preparation disclosed is intended for making mortar by mixing with water.

The following is a detailed description of the various components of the preparation disclosed and the relative quantities in which they are used. The latter will hereinafter always be expressed as quantities in terms of a weight which is a percentage of the overall weight of the powdered preparation.

Dolomitic sand is an aggregate preferably consisting of calcium magnesium carbonate which is always present in the powdered preparation in the range between 75% and 90%, even if its quantity is preferably in the range between 80% and 85%. Moreover, in accordance with the present invention, the dolomitic sand preferably has a particle size measurement of less than 0.8 millimetres.

Using a dolomitic sand with the above-mentioned characteristics in the preparation allows optimisation of the workability, contraction and applicability of the end product (mortar).

The natural hydraulic lime is preferably a binder consisting of "beta" type dicalcium silicate and monocalcium silicate with the presence of monocalcium aluminate.

In accordance with the present invention, the quantity of natural hydraulic lime is in the range between 5% and 20%, and, preferably, in the range between 10% and 13%.

The use of such a component in the quantities indicated allows optimisation of the final mechanical resistance of the product (mortar) which can be obtained with the powdered preparation disclosed.

In the present invention the sulpho-aluminous cement may preferably consist of a binder which basically consists of calcium aluminates with the addition of calcium sulphate or of a binder basically consisting of calcium sulpho-aluminates. In accordance with the present invention, the sulpho-aluminous cement is present in the preparation in a quantity between 2% and 10% and preferably between 5% and 7%.

The lithium carbonate is an additive which affects the setting and hardening speed of the mixture obtained by mixing the powdered preparation with water.

In general, lithium carbonate is used in the range between 0.05% and 0.20%, but preferably in the range between 0.09% and 0.14%.

Use of the natural hydraulic lime, the sulpho-aluminous cement and the lithium carbonate in the preferred quantities indicated above allows optimisation of control of the mortar setting time. In turn, the methyl-hydroxypropyl starch is an additive which allows optimisation of the workability and thixotropicity (tendency to run) of the mortar.

In accordance with the present invention it may be used in the range between 0.010% and 0.035%, but preferably in the range between 0.020% and 0.025%. Finally, the sodium lauryl sulphate is a surface-active additive which allows optimisation of the mixing of the preparation with water as well as optimising the applicability of the mortar. In accordance with the present invention it may be used in a quantity in the range between 0.025% and 0.050%, although it is preferably used in the range between 0.035% and 0.040%.

To summarise, in the preferred embodiments, the preparation comprises the following components:
- dolomitic sand with a particle size measurement of less than 0.8 mm, in the range between 80% and 85%;
- natural hydraulic lime in the range between 10% and 13%;
- sulpho-aluminous cement in the range between 5% and 7%;
- lithium carbonate in the range between 0.09% and 0.14%;
- methyl-hydroxypropyl starch in the range between 0.020% and 0.025%; and
- sodium lauryl sulphate in the range between 0.035% and 0.040%.

In particular, in a specific preferred embodiment, the preparation comprises:
- 82.8% dolomitic sand with a particle size measurement of less than 0.8 mm;
- 11% natural hydraulic lime;
- 6% sulpho-aluminous cement;
- 0.12% lithium carbonate;
- 0.022% methyl-hydroxypropyl starch; and
- 0.038% sodium lauryl sulphate.

Moreover, advantageously the preparation only comprises said elements, of which it is made up entirely (besides any impurities).

The present invention brings important advantages. Firstly, the powdered preparation disclosed by the present invention allows mortars to be made for plastering and filling chases which can be used both for filling chases and for the final plastering. Such mortars have practically no contraction (therefore, they do not cause cracks to form), and have excellent surface quality. Therefore, thanks to such mortars it is possible, in a single operation, to close chases, obtaining a surface finish comparable to that of a conventional plaster, on which the skim coat can be directly applied.

In addition, the mortars which can be obtained with the present invention have a high drying speed (of around 30 - 45 minutes). Therefore, not long after they have been applied, it is possible to also proceed with application of the skim coat, saving a significant amount of working time, since the whole job can be completed in a single operation without having to return to the site the next day. It should be noticed that the present invention is relatively easy to produce and that even the cost linked to implementing the invention is not very high.

## Claims

1. A powdered preparation for making mortars for plastering and filling chases, **characterised in that** it comprises at least the following components, in quantities in terms of a weight expressed as a percentage of the overall weight of the preparation:
- dolomitic sand in the range between 75% and 90%;
- natural hydraulic lime in the range between 5% and 20%;
- sulpho-aluminous cement in the range between 2% and 10%;
- lithium carbonate in the range between 0.05% and 0.20%.

2. The powdered preparation according to claim 1, **characterised in that** it comprises, in quantities in terms of a weight expressed as a percentage of the overall weight of the preparation:
- dolomitic sand in the range between 80% and 85%; and/or
- natural hydraulic lime in the range between 10% and 13%; and/or
- sulpho-aluminous cement in the range between 5% and 7°; and/or
- lithium carbonate in the range between 0.09% and 0.14%.

3. The powdered preparation according to claim 1 or 2, **characterised in that** it also comprises at least one of the following components in quantities in terms of a weight expressed as a percentage of the overall weight of the preparation:
- methyl-hydroxypropyl starch in the range between 0.010% and 0.035%; and
- sodium lauryl sulphate in the range between 0.025% and 0.050%.

4. The powdered preparation according to claim 3, **characterised in that** it comprises, in quantities in terms of a weight expressed as a percentage of the overall weight of the preparation:
- methyl-hydroxypropyl starch in the range between 0.020% and 0.025%; and/or
- sodium lauryl sulphate in the range between 0.035% and 0.040%.

5. The powdered preparation according to claim 4, **characterised in that** it comprises, in quantities in terms of a weight expressed as a percentage of the overall weight of the preparation, 0.022% methyl-hydroxypropyl starch and/or 0.038% sodium lauryl sulphate.

6. The powdered preparation according to any of the foregoing claims, **characterised in that** it comprises, in quantities in terms of a weight expressed as a percentage of the overall weight of the preparation, 83% dolomitic sand, and/or 11% natural hydraulic lime, and/or 6% sulpho-aluminous cement, and/or 0.12% lithium carbonate.

7. The powdered preparation according to any of the foregoing claims, **characterised in that** the dolomitic sand has a particle size measurement of less than 0.8 millimetres.

8. The powdered preparation according to any of the foregoing claims, **characterised in that** it is premixed.

9. The powdered preparation according to any of the foregoing claims, **characterised in that** it consists exclusively of dolomitic sand, natural hydraulic lime, sulpho-aluminous cement, lithium carbonate, methyl-hydroxypropyl starch and sodium lauryl sulphate.

## Patentansprüche

1. Eine pulverförmige Zubereitung zur Herstellung von Mörtel für Putz- und Füllformen, **gekennzeichnet dadurch, dass** sie zumindest folgende Bestandteile enthält, in einer Gewichtsmenge, die als Prozentsatz des Gesamtgewichts der Zubereitung ausgedrückt ist:
- Dolomitsand im Bereich zwischen 75 % und 90 %;
- natürlichen hydraulischen Kalk im Bereich zwischen 5 % und 20 %;
- Sulfoaluminatzement im Bereich zwischen 2 % und 10 %;
- Lithiumcarbonat im Bereich zwischen 0,05 % und 0,20 %.

2. Die pulverförmige Zubereitung nach Patentanspruch 1, **gekennzeichnet dadurch, dass** sie, in einer Gewichtsmenge, die als Prozentsatz des Gesamtgewichts der Zubereitung ausgedrückt ist, Folgendes enthält:
- Dolomitsand im Bereich zwischen 80 % und 85 %; und/oder
- natürlichen hydraulischen Kalk im Bereich zwischen 10 % und 13 %; und/oder
- Sulfoaluminatzement im Bereich zwischen 5 % und 7 %; und/oder
- Lithiumcarbonat im Bereich zwischen 0,09 % und 0,14 %.

3. Die pulverförmige Zubereitung nach einem der vorherigen Patentansprüche 1 oder 2, **gekennzeichnet dadurch, dass** sie außerdem mindestens eines der folgenden Bestandteile enthält, in einer Gewichtsmenge, die als Prozentsatz des Gesamtgewichts der Zubereitung ausgedrückt ist:
- Methylhydroxypropylstärke im Bereich zwischen 0,010 % und 0,035 %; und
- Natriumlaurylsulfat im Bereich zwischen 0,025 % und 0,050 %.

4. Die pulverförmige Zubereitung nach Patentanspruch 3, **gekennzeichnet dadurch, dass** sie, in einer Gewichtsmenge, die als Prozentsatz des Gesamtgewichts der Zubereitung ausgedrückt ist, Folgendes enthält:
- Methylhydroxypropylstärke im Bereich zwischen 0,020 % und 0,025 %; und/oder
- Natriumlaurylsulfat im Bereich zwischen 0,035 % und 0,040 %.

5. Die pulverförmige Zubereitung nach Patentanspruch 4, **gekennzeichnet dadurch, dass** sie, in einer Gewichtsmenge, die als Prozentsatz des Gesamtgewichts der Zubereitung ausgedrückt ist, 0,022 % Methylhydroxypropylstärke und/oder 0,038% Natriumlaurylsulfat enthält.

6. Die pulverförmige Zubereitung nach einem der vorherigen Patentansprüche, **gekennzeichnet dadurch, dass** sie, in einer Gewichtsmenge, die als Prozentsatz des Gesamtgewichts der Zubereitung ausgedrückt ist, 83 % Dolomitsand und/oder 11 % natürlichen hydraulischen Kalk und/oder 6 % Sulfoaluminatzement und/oder 0,12 % Lithiumcarbonat enthält.

7. Die pulverförmige Zubereitung nach einem der vorherigen Patentansprüche, **gekennzeichnet dadurch, dass** der Dolomitsand eine Korngröße von weniger als 0,8 Millimetern hat.

8. Die pulverförmige Zubereitung nach einem der vorherigen Patentansprüche, **gekennzeichnet dadurch, dass** sie fertig angemischt ist.

9. Die pulverförmige Zubereitung nach einem der vorherigen Patentansprüche, **gekennzeichnet dadurch, dass** sie ausschließlich aus Dolomitsand, natürlichem hydraulischem Kalk, Sulfoaluminatzement, Lithiumcarbonat, Methylhydroxypropylstärke und Natriumlaurylsulfat besteht.

## Revendications

1. Une préparation en poudre pour la fabrication de mortiers pour le plâtrage et le remplissage de saignées, **caractérisée en ce qu'**elle comprend au moins les composants suivants, dans des quantités en termes d'un poids exprimé comme un pourcentage du poids total de la préparation :
- sable dolomitique dans la plage comprise entre 75 % et 90 % ;
- chaux hydraulique naturelle dans la plage comprise entre 5 % et 20 % ;
- ciment sulfo-alumineux dans la plage comprise entre 2 % et 10 % ;
- carbonate de lithium dans la plage comprise entre 0,05 % et 0,20 %.

2. La préparation en poudre selon la revendication 1, **caractérisée en ce qu'**elle comprend, dans des quantités en termes d'un poids exprimé comme un pourcentage du poids total de la préparation :
- sable dolomitique dans la plage comprise entre 80 % et 85 % ; et/ou
- chaux hydraulique naturelle dans la plage comprise entre 10 % et 13% ; et/ou
- ciment sulfo-alumineux dans la plage comprise entre 5 % et 7 % ; et/ou
- carbonate de lithium dans la plage comprise entre 0,09 % et 0,14 %.

3. La préparation en poudre selon la revendication 1 ou 2, **caractérisée en ce qu'**elle comprend aussi au moins un des composants suivants dans des quantités en termes d'un poids exprimé comme un pourcentage du poids total de la préparation :
- amidon méthyle-hydroxypropyle dans la plage comprise entre 0,010 % et 0,035 % ; et
- sulfate lauryle de sodium dans la plage comprise entre 0,025 % et 0,050 %.

4. La préparation en poudre selon la revendication 3, **caractérisée en ce qu'**elle comprend, dans des quantités en termes d'un poids exprimé comme un pourcentage du poids total de la préparation :
- amidon méthyle-hydroxypropyle dans la plage comprise entre 0,020 % et 0,025 % ; et/ou
- sulfate lauryle de sodium dans la plage comprise entre 0,035 % et 0,040 %.

5. La préparation en poudre selon la revendication 4, **caractérisée en ce qu'**elle comprend, dans des quantités en termes d'un poids exprimé comme un pourcentage du poids total de la préparation, 0,022 % d'amidon méthyle-hydroxypropyle et/ou 0,038 % de sulfate lauryle de sodium.

6. La préparation en poudre selon l'une quelconque des revendications précédentes, **caractérisée en ce qu'**elle comprend, dans des quantités en termes d'un poids exprimé comme un pourcentage du poids total de la préparation, 83 % de sable dolomitique, et/ou 11 % de chaud hydraulique naturelle, et/ou 6 % de ciment sulfo-alumineux, et/ou 0,12 % de carbonate de lithium.

7. La préparation en poudre selon l'une quelconque des revendications précédentes, **caractérisée en ce que** le sable dolomitique a une taille de particules inférieure à 0,8 millimètres.

8. La préparation en poudre selon l'une quelconque des revendications précédentes, **caractérisée en ce qu'**elle est pré-mélangée.

9. La préparation en poudre selon l'une quelconque des revendications précédentes, **caractérisée en ce qu'**elle est constituée exclusivement de sable dolomitique, chaux hydraulique naturelle, ciment sulfo-alumineux, carbonate de lithium, amidon méthyle-hydroxypropyle et sulfate lauryle de sodium.
